# EUROPÄISCHE PATENTSCHRIFT

(11) **EP 0 993 694 B1**
(45) Veröffentlichungstag und Bekanntmachung des Hinweises auf die Patenterteilung: **19.09.2001**
(21) Anmeldenummer: 98936185.2
(22) Anmeldetag: 17.06.1998
(51) Int. Cl.: H02H 3/087, H02H 1/00

(54) **ÜBERWACHUNGSVERFAHREN FÜR EINEN STROMKREIS**
METHOD FOR MONITORING AN ELECTRIC CIRCUIT
PROCEDE DE CONTROLE POUR CIRCUIT ELECTRIQUE

(30) Priorität: 30.06.1997 DE 19727825
(43) Veröffentlichungstag der Anmeldung: 19.04.2000
(73) Patentinhaber: SIEMENS AKTIENGESELLSCHAFT, 80333 München (DE)
(72) Erfinder: GRIEPENTROG, Gerd, D-08066 Zwickau (DE); GUNSELMANN, Walter, D-91074 Herzogenaurach (DE); LINK, Dietmar, D-91325 Adelsdorf (DE); MAIER, Reinhard, D-91074 Herzogenaurach (DE)
(86) Internationale Anmeldenummer: DE9801640
(87) Internationale Veröffentlichungsnummer: WO9901916

(56) Entgegenhaltungen:
- US-A- 4 466 071
- US-A- 5 103 365
- US-A- 5 136 459
- LI S ET AL: "OPTIMAL ARCING FAULT DETECTION USING SIGNAL PROCESSING TECHNIQUES" ELECTRIC POWER SYSTEMS RESEARCH, Bd. 21, Nr. 2, 1. Juni 1991, Seiten 121-128, XP000560839
- INOUE K ET AL: "DEVELOPMENT OF PROTECTION SYSTEM BASED ON PULSED POWER SWITCHING FOR HIGH-RESISTANCE GROUND FAULT OF POWER FEEDING SYSTEM OF DC ELECTRIC RAILWAY" DIGEST OF TECHNICAL PAPERS OF THE INTERNATIONAL PULSED POWER CONFERENCE, ALBUQUERQUE, JUNE 21 - 23, 1993, Bd. 1, Nr. CONF. 9, 21. Juni 1993, Seiten 25-28, XP000531050 PRESTWICH K R;BAKER W L (EDS )

## Beschreibung

Die vorliegende Erfindung betrifft ein Übetwachungsverfahren für einen Stromkreis, in den von einem Wechselstromnetz mit einer Grundfrequenz ein zeitlich veränderlicher Strom eingespeist wird, der vom Stromkreis gleichgerichtet wird.

In Stromkreisen, die äußeren Umwelteinflüssen ausgesetzt sind, insbesondere bei Bahnstromversorgungen, können Lichtbögen auftreten, welche Schäden verursachen können. Im Stand der Technik werden daher derartige Stromkreise mit Schutzgeräten überwacht, welche den zeitlichen Verlauf des Stromes erfassen und den überwachten Stromkreis vom Stromnetz trennen, wenn der eingespeiste Strom einen maximalen Wert übersteigt oder die zeitliche Änderung des Stromes einen Grenzwert übersteigt, die Stromänderung in Verbindung mit bestimmten charakteristischen Zeiten einen bestimmten Wert überschreitet oder eine durch Modellbildung errechnete Temperatur innerhalb des Stromkreises überschritten wird. Die Auslöseschwellen müssen daher niedrig genug angesetzt sein, um Schäden in dem überwachten Stromkreis zu verhindern.

Je nach den Verbrauchern, die an den überwachten Stromkreis angeschlossen sind, kann aber auch das (normale) Zuschalten eines neuen Verbrauchers aufgrund des von dem neuen Verbraucher kurzfristig benötigten Stromes zu einer Auslösung führen, obwohl eigentlich kein Auslösegrund vorliegt. Insbesondere kann bei Bahnstromversorgungen die Aufladung von Saugkreisen moderner Triebfahrzeuge bei der Verbindung des Stromabnehmers des Triebfahrzeugs mit dem Fahrdraht hohe transiente Ströme verursachen, welche kurzfristig die Auslöseschwelle überschreiten können. Die Auslöseschwelle muß daher gleichzeitig hoch genug sein, um Fehlauslösungen zu vermeiden. Dieser Konflikt ist im Stand der Technik nicht immer oder nur unter Schwierigkeiten lösbar. Besonders kritisch ist hierbei, daß hochohmige Lichtbögen unterhalb der Auslöseschwellen bleiben und so unbemerkt weitgehende Zerstörungen hervorrufen können, wenn die Auslöseschwellen zu hoch angesetzt werden.

Aus der US-A-4,466,071 ist bekannt, in einem Stromkreis nur die Hochfrequenzkomponenten zu überwachen. Hierzu werden alle Stromkomponenten mit einer Frequenz unterhalb einer Grenzfrequenz von z. B. 2 kHz ausgeblendet und nur das verbleibende Restsignal betrachtet. Der überwachte Stromkreis wird vom Stromnetz getrennt, wenn eine vorbestimmte Anzahl von Zyklen des Wechselstroms ein Reststromsignal oberhalb eines Grenzwertes aufweist.

Aus der US-A-5,136,459 ist bekannt, ein rauschreduziertes Stromsignal während eines Frequenzintervalls zu integrieren und den in den Stromkreis eingespeisten Strom zu begrenzen, wenn der Integrationswert und der momentane Stromwert beim Integrationsende bestimmte Wertkombinationen erfüllen.

Aus dem Fachaufsatz "Optimal Arcing Fault Detection Using Signal Processing Techniques, Electric Power Systems Research, Band 21, Nr. 2 vom 1. Juni 1991, Seiten 121 bis 128 ist bekannt, bei einem Wechselstromnetz die Stromkomponente mit der Grundfrequenz auszufiltern und zur Auswertung, ob ein Lichtbogen aufgetreten ist, nur den Energieinhalt der Oberschwingungen heranzuziehen.

Aus der US-A-5,103,365 ist bekannt, bei einem Drehstromnetz eine Hochfrequenzfilterung vorzunehmen und den Stromkreis vom Drehstromnetz zu trennen, wenn die Hochfrequenzkomponenten während eines vorwählbaren Zeitraums einen bestimmten Energieinhalt überschreiten.

Die Aufgabe der vorliegenden Erfindung besteht darin, ein Überwachungsverfahren für einen Gleichstromkreis, der mindestens eine typische Verbraucherstromfrequenz aufweist, zur Verfügung zu stellen, bei dem einerseits Fehlauslösungen vermieden werden, andererseits bei Auftreten von Lichtbögen im überwachten Stromkreis diese sicher erkannt werden und der Stromkreis in diesem Fall vom Stromnetz getrennt wird.

Die Aufgabe wird durch ein Verfahren mit folgenden Verfahrensschritten gelöst:
- der zeitliche Verlauf des gleichgerichteten Stromes wird erfaßt und einer Frequenzfilterung unterzogen,
- bei der Frequenzfilterung werden Stromkomponenten mit einer Frequenz in der Nähe der typischen Verbraucherstromfrequenz ausgefiltert,
- der frequenzgefilterte Strom wird während eines vorbestimmten Zeitintervalls integriert und
- der überwachte Stromkreis wird vom Stromnetz getrennt, wenn der integrierte frequenzgefilterte Strom einen vorbestimmten Integrationsschwellwert übersteigt.

Die typische Verbraucherstromfrequenz kann dabei systembedingt vorbekannt sein oder zuvor experimentell ermittelt worden sein.

Vorzugsweise wird das beanspruchte Überwachungsverfahren nicht alternativ, sondern zusätzlich zum Überwachungsverfahren des Standes der Technik ausgeübt. Es wird also auch der nicht frequenzgefilterte gleichgerichtete Strom, im folgenden als Originalstrom bezeichnet, überwacht und der überwachte Stromkreis vom Stromnetz getrennt, wenn der überwachte Originalstrom mindestens einen vorbestimmten Trennschwellwert übersteigt. Der Trennschwellwert ist dabei derart gewählt, daß ein Überschreiten des Trennschwellwertes stets einen kritischen Zustand des überwachten Stromkreises bedeutet, so daß in diesem Fall der Stromkreis stets und bedingungslos vom Stromnetz getrennt wird.

Die Überwachung des Stromkreises ist noch effektiver, wenn die Verfahrensschritte des Anspruchs 1 nur dann ausgeführt werden, wenn der überwachte Originalstrom einen vorbestimmten Vorwarnwert unterhalb des Trennschwellwerts übersteigt. Der Vorwarnwert ist dabei derart gewählt, daß ein Nichtüberschreiten des Vorwarnwertes in bezug auf die konventionelle Auswertung stets einen unkritischen Zustand des überwachten Stromkreises bedeutet.

Ein Lichtbogen, insbesondere ein niederohmiger Lichtbogen, ist noch sicherer erkennbar, wenn bei der Frequenzfilterung Stromkomponenten mit einer Frequenz in der Nähe mindestens eines ganzzahligen Vielfachen der Grundfrequenz ausgefiltert werden.

Die Erfindung macht sich also die Erkenntnis zunutze, daß Lichtbogenerscheinungen im wesentlichen ein undeterminiertes und breitbandiges Spektrum (Rauschen) des eingespeisten Stromes verursachen, während die systembedingten Stromkomponenten sich auf die ganzzahligen Vielfachen der Grundfrequenz und die typische Verbraucherstromfrequenz konzentrieren. Das Ausblenden der obengenannten Frequenzen reduziert daher das gemessene Signal um einen Großteil des systembedingten frequenzbezogenen Stromanteils, aber nur um einen geringen Teil des Stromanteils eines eventuell vorhandenen Lichtbogens. Mit dem erfindungsgemäßen Verfahren kann daher ein Lichtbogen dadurch erkannt werden, daß der Stromanteil außerhalb der typischen Verbraucherstromfrequenz und der ganzzahligen Vielfachen der Grundfrequenz vergleichsweise groß ist, während eine konventionelle Überwachung noch nicht ansprechen könnte.

Weitere Vorteile und Einzelheiten ergeben sich aus der nachfolgenden Beschreibung eines Ausführungsbeispiels. Dabei zeigen:
Fig. 1 ein Stromnetz und einen Stromkreis und
Fig. 2 ein Überwachungsgerät zur Durchführung des Verfahrens.

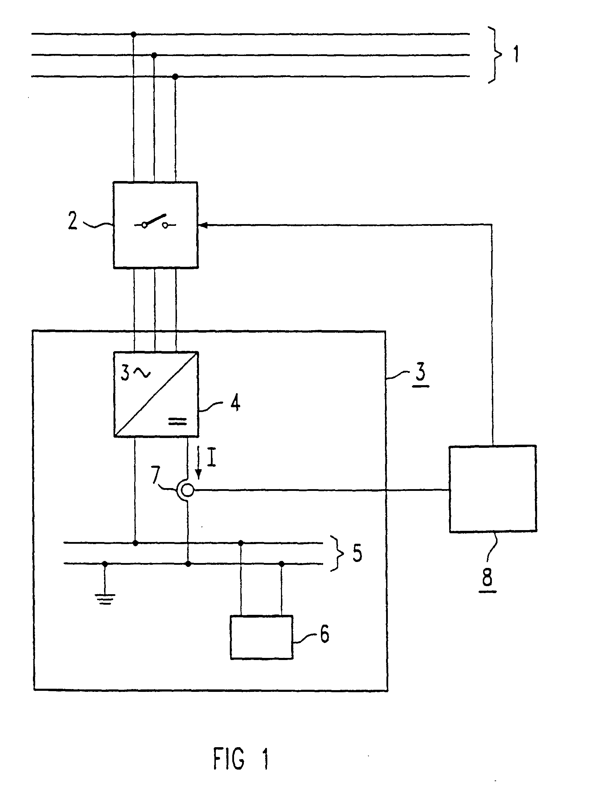

Gemäß Fig. 1 wird ein Wechselstrom von einem Dreiphasen-Wechselstromnetz 1 über einen Schalter 2 in einen Stromkreis 3 eingespeist. Innerhalb des Stromkreises 3 wird der Strom vorzugsweise mittels eines sechspulsigen Gleichrichters 4 gleichgerichtet, der dann einen oberwellenbehafteten GleichStrom I in die Leitungen 5 einspeist. An die Leitungen 5 sind Verbraucher 6 angeschlossen, von denen der Übersichtlichkeit halber nur einer dargestellt ist.

Das Dreiphasen-Wechselstromnetz 1 kann das normale Wechselstromnetz sein, welches z.B. mit einer Grundfrequenz f_{G} von 50 bzw. 60 Hz arbeitet. Die Leitungen 5 sind beispielsweise eine Gleichspannungs-Bahnstromversorgung für ein Straßenbahnnetz, die Verbraucher 6 sind Straßenbahn-Triebwagen. Aufgrund der Tatsache, daß nicht alle Verbraucher 6 zu jedem Zeitpunkt denselben Strom benötigen, ist der eingespeiste Gleichstrom I selbstverständlich zeitabhängig bzw. zeitlich veränderlich.

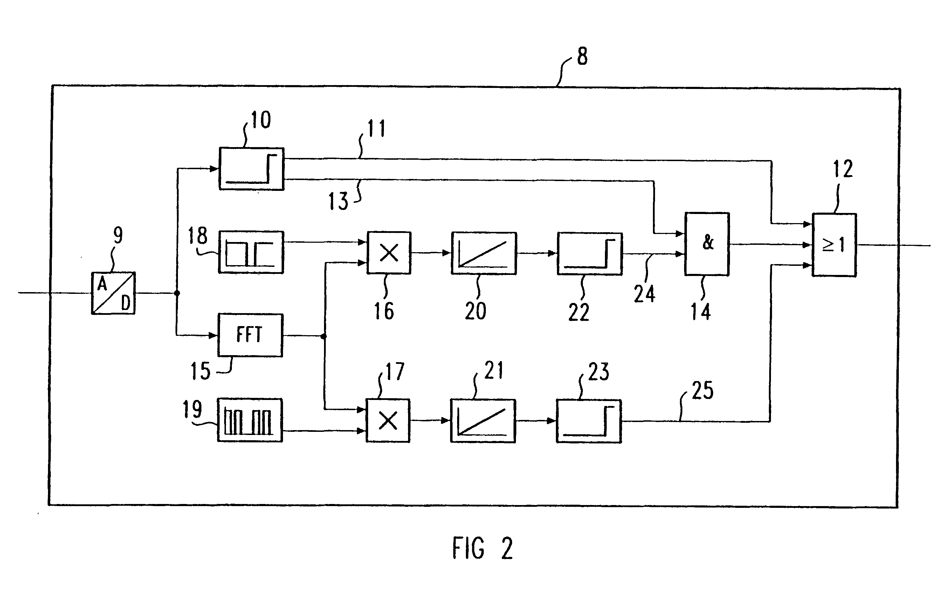

Der zeitlich veränderliche Gleichstrom I wird mittels des Strommessers 7 erfaßt und der gemessene Wert an das Überwachungsgerät 8 weitergeleitet. Dort erfolgt eine Auswertung des Gleichstromes I und seines zeitlichen Verlaufs. Wenn der Gleichstrom I und/oder sein zeitlicher Verlauf gewisse Auslösegrenzwerte überschreiten, auf die nachstehend in Verbindung mit Fig. 2 noch eingegangen werden wird, wird der Schalter 2 geöffnet und der Stromkreis 3 vom Stromnetz 1 getrennt.

Fig. 2 zeigt nun den Aufbau des Überwachungsgeräts 8. Der gemessene Gleichstrom I wird im Überwachungsgerät 8 zunächst durch einen Analog/Digital-Wandler 9 digitalisiert und dann einer Auswerteeinheit 10 zugeführt. Die Auswerteeinheit 10 ist eine konventionelle Auswerteeinheit wie sie auch im Stand der Technik verwendet wird. Sie ermittelt
- den momentanen Strom I,
- die momentane Stromänderung dI/dt,
- den Stromsprung ΔI in Verbindung mit vorbekannten charakteristischen Zeiten und
- eine durch Modellbildung errechnete Temperatur T der Leitungen 5 (d. h. bei Bahnstromversorgungen der Fahrleitung).

Sowie eine dieser Größen einen vorbestimmten Trennschwellwert übersteigt, übermittelt die Auswerteschaltung 10 über eine erste Ausgabeleitung 11 ein logisches 1-Signal an ein Oder-Gatter 12. Dessen Ausgangssignal wird somit ebenfalls logisch 1. Das Ausgangssignal des Oder-Gatters 12 bewirkt dann das Öffnen des Schalters 2 (siehe Fig. 1). Die Trennschwellwerte sind dabei derart gewählt, daß ein Überschreiten eines der Trennschwellwerte stets einen kritischen Zustand des Stromkreises 3 bedeutet, so daß in diesem Fall der Stromkreis 3 stets und bedingungslos vom Stromnetz 1 getrennt wird.

Wenn die obenstehend genannten Werte zwar die Trennschwellwerte nicht übersteigen, einer oder mehrere der ermittelten Größen aber einen vorbestimmten Vorwarnwert unterhalb der Grenzschwellwerte, so gibt die Auswerteschaltung 10 ein 1-Signal auf eine zweite Ausgabeleitung 13. Dadurch wird dann ein Und-Gatter 14 aktiviert. Die Vorwarnwerte sind dabei derart gewählt, daß ein Nichtüberschreiten der Vorwarnwerte in bezug auf die konventionelle Auswertung stets einen unkritischen Zustand des Stromkreises 3 bedeutet. Das Überschreiten eines der Vorwarnwerte bei gleichzeitigem Nichtüberschreiten des hiermit korrespondierenden Trennschwellwertes bedeutet daher, daß in bezug auf die konventionelle Auswertung zwar ein kritischer Zustand des überwachten Stromkreises 3 vorliegen könnte, dies aber nicht sicher ist.

Wie ferner aus Fig. 2 ersichtlich ist, wird der digitalisierte Gleichstrom I auch einem Transformationsglied 15 zugeführt. Das Transformationsglied 15 führt eine Fouriertransformation des Gleichstromes I nach der Frequenz f durch. Vorzugsweise ist das Transformationsglied 15 derart ausgebildet, daß es eine schnelle Fouriertransformation (fast fourier transformation = FFT) vornimmt. Das fouriertransformierte Signal wird Multiplizierern 16, 17 zugeführt, denen als zweites Eingangssignal Ausgangssignale von Frequenzmasken 18, 19 zugeführt werden.

Das Ausgangssignal der Frequenzmaske 18 ist derart, daß durch den Multiplizierer 16 Stromkomponenten mit einer Frequenz f in der Nähe mindestens einer typischen Verbraucherstromfrequenz fₜ ausgefiltert werden. Das Ausgangssignal der Frequenzmaske 19 ist derart, daß zusätzlich zu den Stromkomponenten mit einer Frequenz f in der Nähe der typischen Verbraucherstromfrequenz fₜ auch Stromkomponenten mit einer Frequenz f in der Nähe des Sechsfachen, des Zwölffachen, des Achtzehnfachen usw. der Grundfrequenz f_{G} ausgefiltert werden.

Das Transformationsglied 15 sowie der Multiplizierer 16 bzw. 17 und die Frequenzmaske 18 bzw. 19 bilden im gezeigten Ausführungsbeispiel jeweils einen Frequenzfilter.

Die mindestens eine typische Verbraucherstromfrequenz fₜ kann aufgrund der Systemgegebenheiten des Stromkreises 3 von vorneherein bekannt sein. Alternativ ist es aber auch möglich - unter Umständen sogar nötig -, den Stromkreis 3 experimentell auszumessen und so die typische Verbraucherstromfrequenz fₜ zu ermitteln.

Die Oberschwingungen der Grundfrequenz f_{G} sind durch die Grundfrequenz f_{G} des Stromnetzes 1 bekannt. Sie betragen bei einer Grundfrequenz f_{G} = 50 Hz 300/600/900/... Hz und betragen bei einer Grundfrequenz f_{G} = 60 Hz 360/720/1080/... Hz. Im Regelfall wird eine Ausfilterung des Sechs-, Zwölf- und Achtzehnfachen der Grundfrequenz f_{G} genügen, da die Intensität der höheren Oberschwingungen rasch abnimmt. Bei Bedarf können aber auch weitere Oberschwingungen ausgefiltert werden.

Die Ausgangssignale der Multiplizierer 16, 17 werden jeweils einem Integrator 20 bzw. 21 zugeführt, welche diese Ausgangssignale jeweils über ein vorbestimmtes Zeitintervall integrieren. Das vorbestimmte Zeitintervall ist dabei größer als die mit der Grundfrequenz f_{G} korrespondierende Periode. Es ist also größer als 20 bzw. 16,6 ms. Vorzugsweise beträgt das vorbestimmte Zeitintervall zwischen 70 und 150 ms. Es beträgt beispielsweise 100 ms und entspricht somit 5 bzw. 6 Perioden der Grundfrequenz f_{G}.

Der Begriff "in der Nähe einer Frequenz" ist dabei durch das vorbestimmte Zeitintervall festgelegt, da dieses Zeitintervall die maximale Frequenzauflösung bestimmt. Bei einem Zeitintervall von 100 ms beträgt die Frequenzauflösung z.B. 20 Hz. Jede Frequenz f ist also nur auf ± 10 Hz genau bestimmt.

Die Ausgangssignale der Integratoren 20, 21 werden Auswerteeinheiten 22, 23 zugeführt, welche ihre Ausgabeleitungen 24, 25 auf logisch 1 setzen, wenn die integrierten frequenzgefilterten Ströme, die ihnen von den Integratoren 20, 21 zugeführt werden, vorbestimmte Integrationsschwellwerte übersteigen. Der Integrationsschwellwert der Auswerteeinheit 22 ist dabei ungleich dem Integrationsschwellwert der Auswerteeinheit 23. Dies ist auch selbstverständlich, da im unteren Zweig von Fig. 2 eine andere Frequenzfilterung vorgenommen wurde als im oberen Zweig.

Wie ferner ersichtlich ist, hat das Und-Gatter 14 die Wirkung, daß bezüglich des oberen Zweigs eine Frequenzfilterung und Überwachung des frequenzgefilterten, integrierten Stromes nur dann wirksam vorgenommen wird, wenn der überwachte Originalstrom I einen der Vorwarnwerte übersteigt.

## Patentansprüche

1. Überwachungsverfahren für einen Stromkreis (3), in den von einem Wechselstromnetz (1) mit einer Grundfrequenz (f_{G}) ein zeitlich veränderlicher Strom (I) eingespeist wird, der vom Stromkreis (3) gleichgerichtet wird, wobei der Stromkreis (3) mindestens eine typische Verbraucherstromfrequenz (fₜ) aufweist, mit folgenden Verfahrensschritten:
- der zeitliche Verlauf des gleichgerichteten Stromes (I) wird erfaßt und einer Frequenzfilterung unterzogen,
- bei der Frequenzfilterung werden Stromkomponenten mit einer Frequenz (f) in der Nähe der typischen Verbraucherstromfrequenz (fₜ) ausgefiltert,
- der frequenzgefilterte Strom wird während eines vorbestimmten Zeitintervalls integriert und
- der überwachte Stromkreis (3) wird vom Stromnetz (1) getrennt, wenn der integrierte frequenzgefilterte Strom einen vorbestimmten Integrationsschweliwert übersteigt.

2. Überwachungsverfahren nach Anspruch 1,
**dadurch gekennzeichnet,**
- daß auch der nicht frequenzgefilterte gleichgerichtete Strom (I) überwacht wird und
- daß der überwachte Stromkreis (3) vom Stromnetz (1) getrennt wird, wenn der überwachte, nicht frequenzgefilterte Strom (I) mindestens einen vorbestimmten Trennschwellwert übersteigt.

3. Überwachungsverfahren nach Anspruch 2,
**dadurch gekennzeichnet**,
daß die Verfahrensschritte des Anspruchs 1 nur dann wirksam ausgeführt werden, wenn der überwachte, nicht frequenzgefilcerte gleichgerichtete Strom (I) mindestens einen vorbestimmten Vorwarnwert unterhalb des Trennschwellwerts übersteigt.

4. Überwachungsverfahren nach Anspruch 1, 2 oder 3,
**dadurch gekennzeichnet,**
**daß** bei der Frequenzfilterung Stromkomponenten mit einer Frequenz (f) in der Nähe mindestens eines ganzzahligen Vielfachen der Grundfrequenz (f_{G}) ausgefiltert werden.

5. Überwachungsverfahren nach Anspruch 4,
**dadurch gekennzeichnet,**
- daß der Wechselstrom ein Dreiphasen-Wechselstrom ist,
- daß der Stromkreis (3) den Dreiphasen-Wechselstrom sechspulsig gleichrichtet und
- daß bei der Frequenzfilterung Stromkomponenten mit einer Frequenz (f) in der Nähe mindestens eines ganzzahligen Vielfachen des Sechsfachen der Grundfrequenz (f_{G}) ausgefiltert werden.

6. Überwachungsverfahren nach einem der obigen Ansprüche,
**dadurch gekennzeichnet,**
**daß** das vorbestimmte Zeitintervall größer als 20 ms ist.

7. Überwachungsverfahren nach Anspruch 6,
**dadurch gekennzeichnet,**
**daß** das vorbestimmte Zeitintervall zwischen 70 und 150 ms liegt.

## Claims

1. Method for monitoring an electric circuit (3) into which there is fed from an a.c. network (1) with a basic frequency (f_{G}) a current (I) that is variable over time and which is rectified by the electric circuit (3), with the electric circuit (3) having at least one typical load current frequency (fₜ), the method having the following method steps:
- the time characteristic of the rectified current (I) is detected and subjected to frequency filtration;
- during the frequency filtration current components that have a frequency (f) close to the typical load current frequency (fₜ) are filtered out;
- the frequency-filtered current is integrated for a predetermined time interval; and
- the electric circuit (3) that is monitored is isolated from the electric network (1) if the integrated frequency-filtered current exceeds a predetermined integration threshold value.

2. Monitoring method according to claim 1, characterized
- in that the rectified current (I) that is not frequency-filtered is also monitored; and
- in that the electric circuit (3) that is monitored is isolated from the electric network (1) if the monitored current (I) that is not frequency-filtered exceeds at least one predetermined isolating threshold value.

3. Monitoring method according to claim 2, **characterized in that** the method steps of claim 1 are only effectively carried out if the monitored, rectified current (I) that is not frequency-filtered exceeds at least one predetermined prewarning value below the isolating threshold value.

4. Monitoring method according to claim 1, 2 or 3, **characterized in that** during the frequency-filtration current components having a frequency (f) close to at least one integral multiple of the basic frequency (f_{G}) are filtered out.

5. Monitoring method according to claim 4, characterized
- in that the alternating current is a three-phase alternating current;
- in that the electric circuit (3) rectifies the three-phase alternating current with six pulses; and
- in that during the frequency-filtration current components having a frequency (f) close to at least one integral multiple of the sextuple of the basic frequency (f_{G}) are filtered out.

6. Monitoring method according to one of the above claims, **characterized in that** the predetermined time interval is greater than 20 ms.

7. Monitoring method according to claim 6, **characterized in that** the predetermined time interval lies between 70 and 150 ms.

## Revendications

1. Procédé de contrôle d'un circuit (3) électrique, dans lequel on alimente par un réseau (1) de courant alternatif ayant une fréquence (f_{G}) fondamentale en un courant (I) se modifiant dans le temps et redressé par le circuit (3) électrique, le circuit (3) électrique comportant au moins une fréquence (fₜ) typique de courant d'utilisateur, ayant les stades de procédé suivants :
- on relève la variation dans le temps du courant (I) redressé et on la soumet à un filtrage en fréquence,
- dans le filtrage en fréquence, on élimine par filtrage les composantes de courant ayant une fréquence (f) au voisinage de la fréquence (fₜ) typique de courant de consommateur,
- on intègre le courant filtré en fréquence pendant un intervalle de temps prescrit et
- on sépare le circuit (3) électrique contrôlé du réseau (1) de courant si le courant filtré en fréquence et intégré dépasse une valeur de seuil d'intégration prescrite.

2. Procédé de contrôle suivant la revendication 1,
caractérisé
- en ce que l'on contrôle également le courant (I) redressé et non filtré en fréquence et
- on sépare le circuit (3) électrique contrôlé du réseau (1) de courant si le courant (l) contrôlé et non filtré en fréquence dépasse au moins une valeur de seuil de séparation prescrite.

3. Procédé de contrôle suivant la revendication 2,
caractérisé
en ce que l'on ne rend efficace les stades du procédé de la revendication 1 que si le courant (I) contrôlé, filtré en fréquence et redressé dépasse au moins une valeur d'avertissement prescrite inférieure à la valeur de seuil de séparation.

4. Procédé de contrôle suivant la revendication 1, 2 ou 3,
caractérisé
en ce que, dans le filtrage de fréquence, on élimine les composantes de courant ayant une fréquence (f) proche d'au moins un multiple entier de la fréquence (f_{G}) fondamentale.

5. Procédé de contrôle suivant la revendication 4,
caractérisé
- en ce que le courant alternatif est un courant alternatif triphasé,
- en ce que le circuit (3) électrique redresse par six impulsions le courant alternatif triphasé et
- en ce que, dans le filtrage de fréquence, on élimine par filtrage les composantes de courant ayant une fréquence (f) proche d'au moins un multiple entier de six fois la fréquence (f_{G}) fondamentale.

6. Procédé de contrôle suivant l'une des revendications ci-dessus,
caractérisé
en ce que l'intervalle de temps prescrit est supérieur à 20 ms.

7. Procédé de contrôle suivant la revendication 6,
caractérisé
en ce que l'intervalle de temps prescrit est compris entre 70 et 150 ms.
